(19) Europäisches Patentamt

European Patent Office

Office européen des brevets

(11) **EP 0 999 446 A1**

(12) **EUROPÄISCHE PATENTANMELDUNG**

(43) Veröffentlichungstag:
**10.05.2000 Patentblatt 2000/19**

(51) Int. Cl.[7]: **G01N 31/16**

(21) Anmeldenummer: **99203564.2**

(22) Anmeldetag: **28.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **03.11.1998 CH 221698**

(71) Anmelder: **Mettler-Toledo GmbH**
**8606 Greifensee (CH)**

(72) Erfinder:
• **Aichert, Albert**
  **8625 Dürnten (CH)**
• **Amrein, Gregor**
  **5400 Baden (CH)**

(54) **Verfahren zum Titrieren und Vorrichtung zur Durchführung des Verfahrens**

(57) Bei einem Verfahren zum Titrieren von Substanzen unter schrittweiser Zugabe einer jeweiligen Einzelmenge oder Inkrementes eines Titriermittels in Zeitabständen wird der Ablauf der Reaktion auf das Erreichen ihres Endpunktes hin überwacht und die Zugabe von Titriermittel geregelt. Einzelmenge und Zeitabstände stellen dabei die Titriergeschwindigkeit bestimmende Parameter dar. Für die Regelung der Zugabe von Titriermittel wird nun mindestens eine Differentialkomponente auf Grund des Verlaufes der Zugabe von Titriermittel in Inkrementen herangezogen. Dies kann in einer Vorrichtung mit einer Zugabeeinheit (11-13) zur schrittweiser Zugabe einer jeweiligen Einzelmenge oder Inkrementes eines Titriermittels in Zeitabständen sowie einer Überwachungs- und Regelungseinrichtung zur Regelung der Zugabe von Titriermittel geschehen, in der eine Differenzieranordnung (20, M2) vorgesehen ist, durch welche eine Differentialkomponente aus dem Reaktionsverlauf bestimmbar ist. Diese Differentialkomponente ist dann der Regelungseinrichtung (FUZ) zuführbar.

Fig.3

EP 0 999 446 A1

**Beschreibung**

Die Erfindung betrifft ein Verfahren nach dem Oberbegriff des Anspruches 1.

Derartige Verfahren sind in der Praxis in Labors gebräuchlich und benötigen für die quantitative Bestimmung eine gewisse Zeit. Der Grund liegt ja nicht zuletzt darin, dass sich die Reaktion mit zunehmender Annäherung an den Endpunkt verlangsamt, was schon für sich eine Quelle der Ungenauigkeit sein kann, wenn etwa die Reaktion gegen den Endpunkt hin so langsam abläuft, dass sie als beendet angesehen wird, sich aber ein gewisser, bei der Messung nicht mehr berücksichtigter "Nachverbrauch" einstellt. Anderseits ist auch die Erscheinung des "Übertitrierens" bekannt, bei der zur "Beschleunigung" des Vorganges in einem Inkrement Titriermittel zugegeben wird, daraus zunächst noch kein deutliches Ansprechen erfolgt, Titriermittel weiterhin zugegeben wird und dann ein Überschuss an Titriermittel festgestellt werden muss, was die Genauigkeit der Messung beeinträchtigt.

Der Erfindung liegt deshalb die Aufgabe zugrunde, die Titriergeschwindigkeit und/oder -genauigkeit zu verbessern, und dies gelingt erfindungsgemäss durch die kennzeichnenden Merkmale des Anspruches 1.

Durch die erfindungsgemässe Ausgestaltung wird das Ziel besonders auch unter schwierigen Bedingungen erreicht, wie es etwa die Karl-Fischer-Titration darstellt, bei der oft kleinste Mengen an Wasser festgestellt werden müssen.

Wenn es auch aus den obigen Erläuterungen klar sein dürfte, dass die jeweils zugegebene Einzelmenge (bzw. das Inkrement) und die Zeitabstände der Zugabe solcher Einzelmengen die Titriergeschwindigkeit bestimmende Parameter darstellen, so wird für den Praktiker doch auch bekannt sein, dass es noch weitere Parameter gibt, die die Reaktions- und Messgeschwindigkeit beeinflussen. Unter diesen sind vor allem die zu titrierenden Substanzen selbst, das Titriermittel bzw. das Lösungsmittel und die Elektrodenpinlänge zu nennen, doch gibt es noch weitere Parameter, die dem Fachmann an sich bekannt sind. Der gegenseitige Einfluss solcher Parameter ist schwer zu bestimmen, wenn auch die aus ihnen resultierenden Reaktionskurven im allgemeinen Exponentialkurven in der einen oder anderen Form sein werden. Diese Kurven lassen sich aber empirisch leicht bestimmen und können dann abgespeichert werden um die Veränderung des Reaktionsverlaufes, d.h. deren Differentialkomponente, in die Regelung einfliessen zu lassen.

Da, wie erwähnt, aber alle Parameter unterschiedlichen Einfluss untereinander sowie auf den Ablauf der Reaktion selbst besitzen, wurde gefunden, dass es besonders vorteilhaft ist, wenn die Differentialkomponente in einer Fuzzy-Logik verarbeitet wird. Dieser Fuzzy-Logik kann dann ausser dem jeweiligen Abstand zum Endpunkt zumindest auch die Differentialkomponente (im Sinne der obigen Definition, d.h. als Kurve oder als *ad hoc* gemessene Differentialkomponente) eingegeben werden. Es versteht sich, dass die Anwendung einer Fuzzy-Logik hier von besonders erfinderischer Bedeutung, auch ohne Eingabe der Differentialkomponente ist, da ja eine Unzahl verschiedener Parameter das Geschehen beeinflussen, die mit einer anderen Verknüpfungsart - sobald man einmal erkannt hat, dass sie bei der Regelung berücksichtigt werden sollten - kaum richtig erfasst werden können.

Zur Durchführung des erfindungsgemässen Verfahrens ist es bevorzugt, wenn eine Vorrichtung mit den Merkmalen des Anspruches 7 verwendet wird, wenngleich das Verfahren, im Prinzip, auch bloss manuell ausführbar ist.

Weitere Einzelheiten der Erfindung ergeben sich an Hand der nachfolgenden Beschreibung eines in der Zeichnung schematisch dargestellten Ausführungsbeispieles. Es zeigen:

Fig. 1    ein Diagramm zur Veranschaulichung der erfindungsgemäss ablaufenden Vorgänge;

Fig. 2    zum Vergleich die Vorgänge bei einer herkömmlichen Titration; und

Fig. 3    ein erfindungsgemässes Ausführungsbeispiel eines Schaltschemas samt Vorrichtung.

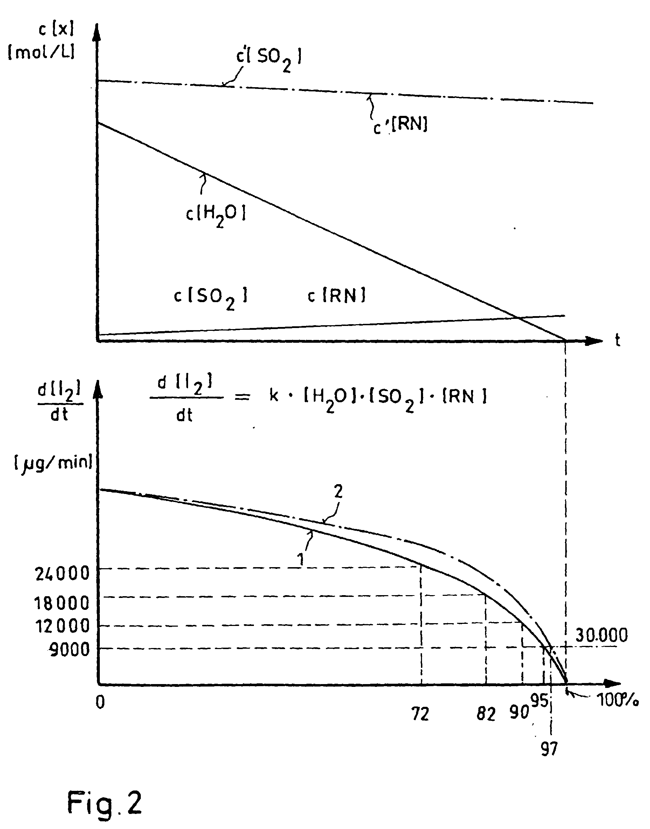

Um mit Fig. 2 und dem darin veranschaulichten Stand der Technik zu beginnen, zeigt diese zwei miteinander in Beziehung stehende Diagramme. Das obere Diagramm stellt die Konzentration in mol/L gegenüber der Zeit t dar. Die Konzentration von Wasser $c[H_2O]$, dessen Gehalt in einer Lösung zu bestimmen ist, nimmt im Verlaufe der Titration mehr oder minder stetig bis zu einem Endpunkt an der Abszisse ab, wie es die entsprechende Linie zeigt.

Zur Bestimmung des Wassergehaltes wird ein Reagenz, beispielsweise als Gemisch von RN (chem. Bezeichnung für ein Amin wie z.B. Imidazol), Jod und $SO_2$, eingesetzt. Dies kann entweder durch Zugabe von Einzelmengen von RN und $SO_2$ jeweils separat als 1-Komponentenlösung oder nach vorheriger Mischung der beiden Komponenten erfolgen. In letzterem Falle wird im allgemeinen ein nicht unbeträchtlicher Überschuss an $SO_2$ vorgesehen, welches die Reaktion beschleunigt, so dass die Reaktion 3- bis 4-mal so schnell abläuft wie die mit einer Einkomponentenlösung, bei der ja auch ein gewisser Mischungseffekt eine Rolle spielt, und bei der man im allgemeinen nur einen leichten Überschuss an $SO_2$ zugibt. Die Formel für die Bestimmung der Reaktionszeit ist unterhalb des oberen Diagrammes in Fig. 2 angegeben, wobei k eine Konstante darstellt.

Das Reaktionsverhalten bei diesen beiden Vorgehensweisen ist durchaus unterschiedlich, denn bei gleichmässig gegen den unteren Endpunkt strebender Wasserkonzentration steigt die Konzentration von RN und $SO_2$ im Falle eines Einkomponentenreagenz im Sinne der Linie C[$SO_2$] und c[RN],von niedrigen Werten ausgehend, leicht an, wogegen im Falle einer Zweikomponentenlösung (siehe strich-punktierte Linie) von einer hohen Konzentration c'[$SO_2$], c'[RN] ausgegangen wird, die im Verlaufe der Reaktion leicht absinkt.

Die Erfindung geht nun von der Erkenntnis aus, dass die Überwachung einer Differentialkomponente, wie der Komponente

$$\frac{d[I_2]}{dt}$$

im Verlaufe der Reaktion erhöhte Bedeutung für die Regelung zukommt. Wie das untere Diagramm in Fig. 2 zeigt, hat dieser Wert, ausgedrückt in µg/min, einen annähernd entsprechend einer Exponentialkurve gekrümmten Verlauf. Dies versteht sich aus der Tatsache, dass zu Anfang, bei hoher Wasserkonzentration (siehe oberes Diagramm) die Reaktionsgeschwindigkeit relativ hoch ist, dann aber, mit der Annäherung an den Endpunkt, abnimmt. Wie der Vergleich der im unteren Diagramm links und rechts eingetragenen Zahlenwerte (µg/min) zeigt, liegen die beiden Kurven 1 und 2 in der Realität nicht in derselben Höhe, sondern übereinander, d.h. die Massstäbe für diese beiden Kurven sind unterschiedlich. Auch ist zu bemerken, dass an der Abszisse des oberen Diagramms wohl die Zeit t angegeben ist, hier aber keine Absolutwerte anzunehmen sind, sondern es sich um Relativwerte - bezogen auf die Abnahme der Wasserkonzentration - handelt.

Diese Abnahme wurde schon bisher für die Regelung der Inkremente, d.h. der jeweils zu einem Zeitpunkt zugegebenen Einzelmengen an Titriermittel, in der Form herangezogen, dass die jeweilige Einzelmenge vom Abstand der Linie c[$H_2O$] vom Endpunkt der Reaktion, d.h. - bezogen auf das obere Diagramm der Fig. 2 - von der Abszisse abhängig gemacht wurde. Dies hat aber bisher zu den eingangs geschilderten Unzukömmlichkeiten geführt.

Dabei veranschaulicht die Kurve 1 das Verhalten mit einem Einkomponentenreagenz und die Kurve 2 die Reaktion bei Verwendung eines Zweikomponenten-Titriermittels. Wiewohl beide Kurven 1, und 2 recht ähnlich sind, kann doch, wie gefunden wurde, eine Verbesserung im Sinne der obigen Aufgabenstellung der Erfindung erreicht werden, wenn solche Kurven, die ja die Veränderung und damit die Differentialkomponente in sich enthalten, empirisch für verschiedene Substanzen, Konzentrationen, Titriermittel (sowohl hinsichtlich deren chemischer Zusammensetzung als auch Konzentration und Zugabe als Ein- oder Zweikomponentenreagenzien), Lösungsmittel (Methanol, Äthanol, Formamid, Chloroform, Pyridin, etc.), Elektrodenpinlänge, Elektrodenpinart, etc. bestimmt und zur Regelung herangezogen werden. Alle diese Parameter können die Kurvenform leicht verändern. Es wurde nämlich erkannt, dass Übertitrierung einerseits, aber auch Ungenauigkeiten des Titrierergebnisses am besten vermieden werden können, wenn die Zugabe der Einzelmengen an Titriermittel am besten in Anpassung an den Kurvenverlauf der in Fig. 2, unten, dargestellten Reaktion erfolgt. Dabei stellt die Berücksichtigung der obigen Parameter in Form von, z.B. gespeicherter oder aufgezeichneter, Kurven nur eine der Möglichkeiten zur Einbeziehung der genannten Differentialkomponente dar, denn es kann diese Komponente natürlich zusätzlich oder alternativ auch aus dem Verlauf der Messung, d.h. der Veränderung der Messwerte, nach Art einer PD-Regelung, gegebenenfalls aber auch einer PID-Regelung gewonnen werden.

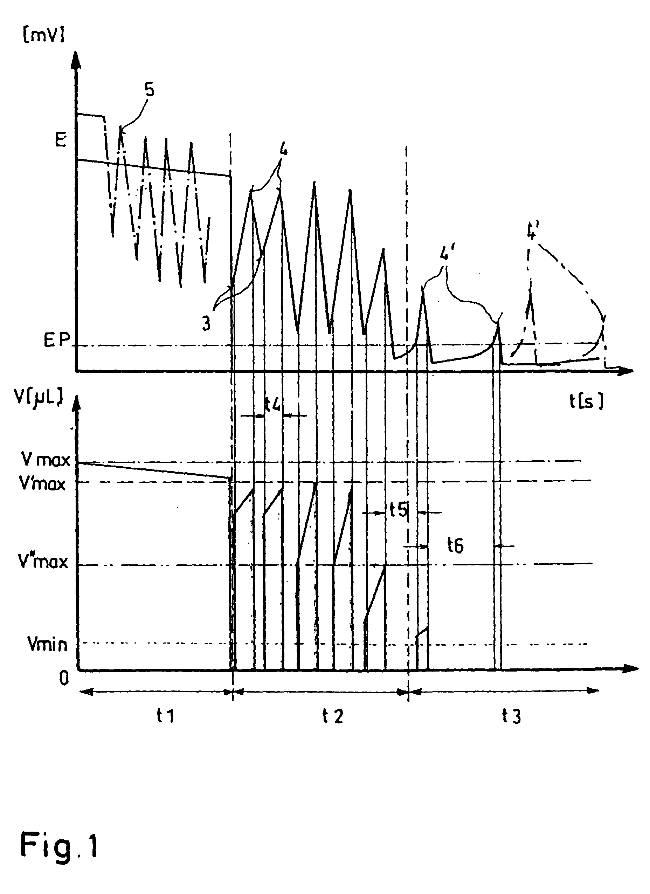

Nun soll an Hand der Fig. 1 die erfindungsgemäss gezogene Konsequenz aus der oben erläuterten Erkenntnis und damit das erfindungsgemäss einzuschlagende Verfahren beschrieben werden.

In Fig. 1 ist wiederum ein oberes und ein unteres Diagramm zu sehen, wovon das erstere eine von einer Messelektrode gemessene Spannung in mV gegen die Titrierzeit t wiedergibt und der Endpunkt EP als horizontale strich-punktierte Linie eingezeichnet ist. Das untere Diagramm veranschaulicht die Volumenänderung in µL über die Zeit t. Dabei wird zweckmässig zur Erhöhung der Genauigkeit und/oder zur Abkürzung der Titrierzeit zunächst eine vorbestimmte und im allgemeinen unterhalb des maximal möglichen Einzelvolumens liegende Maximalmenge Vmax für ein Inkrement vorgegeben und diese Maximalmenge im Verlauf der Titration auf ein niedrigeres Niveau, nämlich auf V'max, gegebenenfalls auch noch nach einer vorbestimmten Zeit auf V''max, abgesenkt. Es ist aber auch möglich, Vmax über die Zeit t1 und t2 aufrecht zu halten und unmittelbar darauf auf V''max umzuschalten. Dabei hat es sich herausgestellt, dass eine Absenkung auf einen Wert für V''max unter 50% von Vmax, wie ersichtlich, am günstigsten ist. Werte zwischen 20 und 40%, insbesondere um 30%, haben sich als besonders vorteilhaft erwiesen.

Dies ergibt, wie ersichtlich, zunächst innerhalb der Titrierzeit t1 sehr viel geringere Schwankungen der Volumendifferenz, was aber auch bedeutet, dass der Titriervorgang effizienter, d.h. rascher, und genauer erfolgt, da nun ein Übertitrieren nicht zu befürchten ist. Gleichzeitig wird das Einzelvolumen pro Inkrement nach unten hin durch die Linie Vmin begrenzt. Es hat sich erwiesen, dass durch solche Massnahmen die Titrationszeit bis auf 50% der ohne die Erfindung benötigten Zeit abgesenkt werden kann, ohne dass an Genauigkeit eingebüsst wird, sondern im Gegenteil an Genauigkeit noch gewonnen wird.

Während Vmin stets das kleinste Inkrement von beispielsweise 0,5 µL bedeutet, ist Vmax in Abhängigkeit vom Titriermittel zu wählen, weil dies einen grossen Einfluss auf den Verlauf der Titration hat. Im allgemeinen wird man Einzelmengen von 2 bis 12 µL wählen, beispielsweise für ein Einkomponenten-Titriermittel, wie Methanol oder Äthanol, 5-8 µL und für ein solches Einkomponenten-Titriermittel, wie Pyridin 3-4 µL, wogegen ein Keton mit 4-5 µL dazwischenliegt. Etwa ein analoges Bild ergibt sich für Zwei-Komponenten-Titriermittel, bei denen die herkömmlichen Mengen zwischen 8 und 20 µL, meist 8 und 12 µL, liegen werden, wogegen Pyridin mit 5-6 µL wiederum deutlich darunterliegt.

Der Vmax-Faktor, d.h. das Mass der Absenkung auf den zweiten Wert V'max oder V''max, wird für die meisten Fälle, wie erwähnt, um 30% betragen, hängt jedoch auch von der anfänglichen Wahl von Vmax ab. Je grösser Vmax ist, desto kleiner wird der Vmax-Faktor zu wählen sein, wenn auch die Abweichungen nicht sehr gross sind. Ist beispielsweise Vmax 8,0 µL so wird man den Vmax-Faktor zweckmässig mit etwa 35%, d.h. bei 30 bis 40%, wählen, womit er im Mittel ja nur um 5% von der genannten 30%-Marke abweicht. Beträgt dagegen Vmax 10,0 µL so wird man den Vmax-Faktor zweckmässig mit etwa 25-30% wählen, also im allgemeinen nur 5% unter der genannten 30%-Marke. Bei 12,0 µL kommen auch Faktoren von Vmax = 20 bis 30% vor. Vmax lässt sich jedoch nicht beliebig gross wählen, weil sonst die Gefahr einer Übertitration besteht.

Erst wenn sich die Kurve 1 oder 2 (Fig. 2) stärker absenkt, beginnen Schwankungen, bei denen Einbrüche 3 mit Spitzen 4 (Fig. 1) abwechseln. Diese Einbrüche werden dadurch hervorgerufen, dass sich nun die Reaktion verlangsamt und jede Zugabe von Titriermittel zunächst eine Verringerung der Elektrodenspannung E hervorruft, nach einem solchen Einbruch jedoch wiederum der Bedarf an Titriermittel anwächst. Die Zugabe an Titriermittel erfolgt dabei in etwa gleichmässigen Zeitabständen t4, die gegebenenfalls bereits etwas länger als im Zeitraum t1 sein können, so dass in diesem ersten Zeitraum t1 der Titriervorgang beschleunigt wird.

Es sei darauf hingewiesen, dass das Vorbestimmen eines maximalen, unterhalb der maximal möglichen Einzelmenge liegenden Einzelvolumens (aus dem Gesamtvolumen aller Inkremente wird ja dann in üblicher Weise der Wassergehalt der jeweiligen Probe bestimmt) einen entscheidenden Einfluss hat. Wird etwa Vmax zu hoch gewählt, so wird sich, wie oben erwähnt, eine ähnliche Erscheinung wie beim Stande der Technik ergeben. Dies veranschaulicht die im oberen Diagramm der Fig. 1 mit ihrem Anfang und ihrem Ende eingezeichnete strich-punktierte Kurve 5, bei der die Schwankungen schon weitaus früher beginnen, wodurch sich die Gefahr einer Übertitrierung ergibt. Gegebenenfalls dauert der "Einschwingvorgang" aber auch länger, was am rechten Ende der Kurve 5 zu sehen ist.

Zur Vermeidung einer Übertitration wird man also die Absenkung von Vmax zu V'max oder zu V''max erst nach dem ersten grösseren Einbruch 3 (rasche Reaktion) nach einer Titration mit einer gegebenen Maximalmenge Vmax bzw. V'max vornehmen, wobei der Ausdruck "grösserer" als Relativmass gegenüber möglichen kleineren Einbrüchen verstanden werden soll. Denn im Falle einer Übertritration ergäbe sich ein zu hohes Resultat. Die Begrenzung des Maximalvolumens führt zunächst also zu einer höheren Genauigkeit, die ja gerade bei einer Karl-Fischer-Titration von besonderer Bedeutung ist. Dieses Maximalvolumen wird nun im Zeitraum t2 zunächst auf ein niedrigeres Maximalvolumen V'max abgesenkt, gegebenenfalls dann noch weiter auf V''max. Damit hat man das Problem der Übertitrierung besser im Griff.

Als Stellgrösse kann jedoch auch, wie bereits angedeutet, die Intervallzeit für ein Inkrement verändert werden. Während innerhalb des Zeitraumes t2 gleichmässige Intervalle t4 vorgesehen werden, nähert sich ja die Reaktion, entsprechend den Kurven 1 und 2 (Fig. 2) immer mehr dem Endpunkt. Damit verlangsamt sie sich auch. Diesem Umstand kann dadurch Rechnung getragen werden, dass ab einem Zeitraum t3 die Intervalle länger werden und ein Mass t5 annehmen. Gegebenenfalls kann eine weitere Verlängerung auf t6 erfolgen. Damit wird dem von Fachleuten gefürchteten "Nachverbrauch" Rechnung getragen, der bisher immer erst nach der Beendigung der Messung entstand und das Resultat verfälschte. Somit werden später auftauchende Spitzen 4' in der Messung noch berücksichtigt. Diese Vorgangsweise ist natürlich nur möglich, wenn man den Kurven 1 und 2 (Fig. 2) Rechnung trägt, indem man ihr Absinken "vorhersieht", d.h. die entsprechende Differentialkomponente in die Regelung einbezieht und nicht nur, wie bisher, den jeweiligen Abstand zum Endpunkt EP (Fig. 1). Wie ersichtlich, entspricht die letzte der gezeigten Spitzen 4' dem Minimalvolumen Vmin, das noch zugegeben wird.

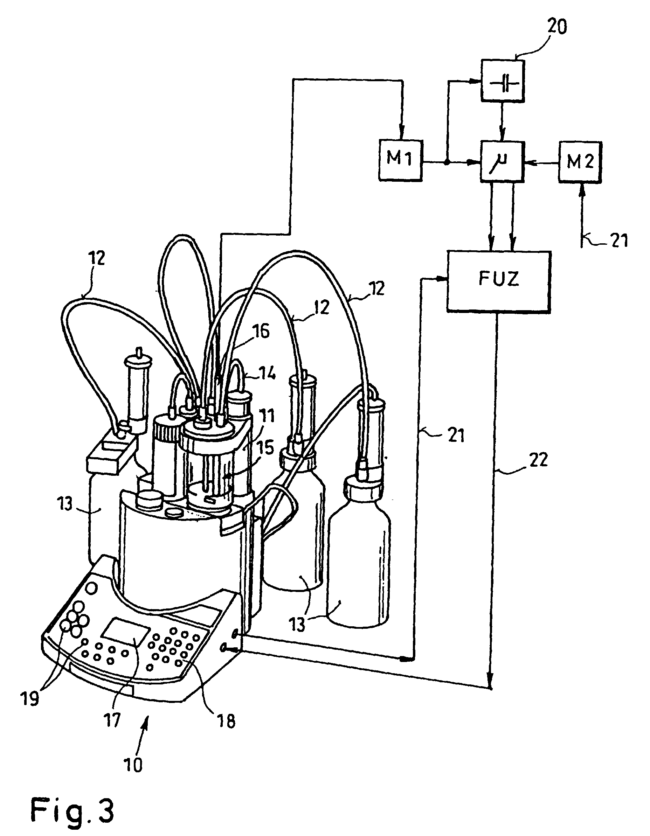

Nun soll an Hand der Fig. 3 erläutert werden, wie man all die verschiedenen Parameter in einer Titriervorrichtung unter Anwendung der oben geschilderten Verfahrensschritte am besten berücksichtigt. Es versteht sich, dass Fig. 3 lediglich ein Ausführungsbeispiel unter vielen anderen denkbaren darstellt, und es wird auch noch auf mögliche Varianten und Ausgestaltungen hingewiesen werden. Ausserdem ist das Ausführungsbeispiel nach Fig. 3 unter Verwendung von Schaltungsblöcken dargestellt, kann aber vorteilhaft auch mit Hilfe einer entsprechenden Software verwirklicht werden.

An einem Titriergerät 10 ist mindestens eine Bürette 11 befestigt, die über einen der Schläuche 12 in an sich bekannter Weise mit einer der Reagenzflaschen 13 zur Zufuhr von Titriermittel verbunden ist. Die Teile 11 bis 13 können als die Zugabeeinheit angesprochen werden. Von der Bürette 11 wird das Titriermittel über einen weiteren Schlauch 14 einem Titrierstand 15 zugeführt, der nach aussen hin abgedichtet ist und zweckmässig in üblicher Weise mit einem Magnetrührer (nicht gezeigt), vorteilhaft mit einstellbarer Rührgeschwindigkeit, ausgestattet ist. Zusätzlich können noch Trocknungsröhrchen und andere Massnahmen zur Vermeidung des Eindringens von die Probe verfälschenden Verschmutzungen, wie im Falle der Karl-Fischer-Titration von Feuchtigkeit, vorgesehen sein. Zur Messung ist beispielsweise eine polarisierte, Doppelstabelektrode 16 aus Platin, z.B. mit einem Elektrodenpinabstand von 2 mm, in den Titrierstand 15 eingesenkt. Ferner ist auch in üblicher Weise eine (nicht gezeigte) Pumpe zur Zufuhr des Titriermittels vorgesehen. Der Titrierapparat 10 besitzt auch ein Anzeigefeld 17, ein numerisches Tastenfeld 18 und Befehlstasten 19. Alle diese Einrichtungen sind an sich herkömmlicher Natur und dem Fachmanne geläufig.

Fig. 3 veranschaulicht aber auch ein Blockschaltbild der im Apparat 10 enthaltenen und einen Teil seiner Elektronik bildenden erfindungsgemässen Schaltung in einer bevorzugten Ausführungsform. Danach werden die von der Elektrode 16 (bei anderen Titriervorgängen beispielsweise das Signal eines Colorimeters, eines Photoelementes od.dgl.) gewonnen Signale zunächst einmal einem Zwischenspeicher M1 oder einer Sample-and-Hold-Schaltung zugeführt. Darin wird der jeweils aktuelle Wert zunächst einmal festgehalten. Er kann aber auch mit vorher festgehaltenen Werten verglichen werden, um die entsprechende Differentialkomponente zu ermitteln. Im vorliegenden Ausführungsbeispiel erfolgt diese Ermittlung jedoch in einer gesonderten Differenzierstufe 20, die ein entsprechendes Signal an einen Prozessor µ abgibt. Der Prozessor µ arbeitet hier als eine Art Vergleichsstufe, denn er erhält auch noch Signale aus einem weiteren Speicher M2, der beispielsweise die oben erwähnten, empirisch ermittelten Kurven enthält, um ausserdem Parameter, wie Substanzen, Konzentrationen, Titriermittel, Lösungsmittel, Elektrodenpinlänge, Elektrodenart etc. zu berücksichtigen, die jeweils für sich bereits zu unterschiedlichen Differentialkomponenten führen (vgl. die Kurven 1 und 2 in Fig. 2). Diese Kurven sind im Speicher M2 einzeln und an unterschiedlichen Speicherplätzen abgespeichert und werden im Verlaufe der Titration mittels des im Prozessor µ enthaltenen Taktgenerators Punkt für Punkt über die Zeit abgelesen.

Es ist möglich, dass der Prozessor µ dabei einen Vergleich zwischen dem Ausgangssignal der Differenzierstufe 20 und dem jeweiligen Signal des Speichers M2 durchführt, um an Hand dieses Vergleichs mögliche Störungen oder Abweichungen zu erkennen. Diese werden dann über eine der Ausgangsleitungen des Prozessors µ entweder direkt an den Apparat 10 zur Anzeige eines Alarms (z.B. "Titrierstand nicht dicht abgeschlossen" od.dgl.) oder indirekt über eine Fuzzy-Logik FUZ abgegeben. Es kann natürlich auch vorkommen, dass ein Lösungsmittel oder eine Substanz nicht genau den gespeicherten Kurven entspricht, so dass der Prozessor µ aus dem Vergleich mit dem Ausgangssignal der Differenzierstufe 20 ein Korrektursignal gewinnen kann. womit beispielsweise die sog. "Drift" eliminiert bzw. berücksichtigt werden kann.

Die Fuzzy-Logik FUZ ihrerseits kann eine ganze Reihe von Eingangssignalen erhalten. Zunächst einmal erhält sie vom Prozessor µ parallel oder seriell eine Information über den jeweiligen Abstand der Kurve vom Endpunkt. Auch zur Bestimmung dieser Information kann dem Prozessor µ der Vergleich mit den im Speicher M2 enthaltenen Kurven nützlich sein. Ferner erhält die Fuzzy-Logik FUZ vom Prozessor µ auch eine Information bzw. ein entsprechendes Signal über die jeweils ermittelte Differentialkomponente. Schliesslich lassen sich über die Tastenfelder 18 und 19 und eine daran angeschlossene Leitung 21 auch noch weitere, von der Fuzzy-Logik FUZ zu berücksichtigende Daten eingeben. Die Leitung 21 kann aber auch zur Veränderung oder zur weiteren Eingabe von Kurvenverläufen mit dem Speicher M2 verbunden sein, wie in Fig. 3 angedeutet ist. Dieser Speicher M2 kann aber auch an Stelle über den Prozessor µ oder zusätzlich dazu mit der Fuzzy-Logik FUZ verbunden sein, um dieser entsprechende Eingangssignale zu liefern. Die Fuzzy-Logik FUZ verknüpft dann all diese Eingabewerte und sendet über eine Ausgangsleitung 22 ein entsprechendes Signal an den Titrierapparat 10, um den Rhythmus der den Titrierstand 15 beliefernden Pumpe und/oder das Maximalvolumen (entsprechend den vorherigen Erläuterungen im Zusammenhang mit Fig. 1) als Stellgrössen zu regeln.

Die Erfindung soll nachstehend an Hand von Beispielen verdeutlicht werden.

Beispiel 1:

Es wurde im wesentlichen so vorgegangen, wie oben an Hand der Fig. 1 beschrieben wurde, doch wurde von Vmax etwa am Ende von t2 unmittelbar auf V"max = 30% von Vmax umgeschaltet. Dabei wurden zunächst 6 Proben mit einem Einkomponenten-Titriermittel getestet, um die dazu benötigte Titrierzeit festzustellen. Zum Vergleich wurden 6 weitere Proben auf herkömmliche Weise titriert. Es zeigte sich dass bei einem Durchschnitt von 5983 ppm Wassergehalt die Titration mit dem erfindungsgemässen Verfahren zwischen 10% und 30% schneller verlief Dabei war auch die Genauigkeit beim erfindungsgemässen Verfahren grösser, weil sich eine bessere Reproduzierbarkeit erwies.

Beispiel 2:

Die Vorgangsweise war die gleiche wie in Beispiel 1, doch wurden je 12 Proben mit einem, wie sich zeigte, durchschnittlichen Wassergehalt von 6132 ppm mittels eines Zwei-Komponenten-Titriermittels analysiert. Während sich dabei ebenfalls die Genauigkeit und Reproduzierbarkeit verbesserte, erhielt man die Messresultate erstaunlicher Weise teilweise bereits in der halben Zeit, die nach dem herkömmlichen Verfahren benötigt wurde.

Beispiel 3:

Während in den Beispielen 1 und 2 relativ hohe Wassergehalte zu messen waren, wurde nun der Versuch unternommen, relativ niedrige Wassergehalte zu bestimmen, wobei natürlich in erster Linie auf die Reproduzierbarkeit der Resultate geachtet wurde. Für 5 Proben wurde Toluol verwendet und ein durchschnittlicher Wassergehalt von nur 115 ppm (560 µg) bei einem Titriermittelverbrauch von 0,3 mL und einer Abweichung s = 0,119 ppm oder 0,1% bestimmt, was mit der herkömmlichen Methode nicht zu erreichen war.

Beispiel 4:

Nun wurden Proben mit noch geringerem Wassergehalt unter Verwendung von Toluol an 6 Proben getestet. Der durchschnittliche Wassergehalt betrug 13,7 ppm (35 µg), wobei die Abweichung allerdings bereits s = 0,557 ppm oder 4,1% betrug. Der Verbrauch an Titriermittel betrug 0,018 mL.

Beispiel 5:

In diesem Beispiel sollte der Einfluss der Elektrodenpinlänge im Falle eines Zweikomponenten-Titriermittels getestet werden.

Es zeigte sich, dass bei Verwendung verschieden langer Elektrodenpins von 2-5 mm und einer Vorgabe von Vmin = 0,0005 mL, Vmax = 0,08 mL und einem Vmax-Faktor F = 40% bei 10 Proben mit einem durchschnittlichen Wassergehalt von 7202 ppm und mit einer Abweichung von nur 0,14% die Titrationszeit von 47 auf 30 Sekunden, von 65 auf 43 Sekunden oder von 96 auf 55 Sekunden abgesenkt werden konnte, d.h. beim erfindungsgemässen Verfahren die Titrationszeit unter 2/3 der herkömmlich benötigten Zeit reduziert werden konnte. Die Elektrodenpinlänge hatte dabei kaum einen Einfluss auf Genauigkeit und Geschwindigkeit.

Nun wurde versucht, die Titrierzeit noch weiter dadurch zu verkürzen, dass ein relativer Driftstop von 40 µg/min vorgegeben wurde. Dabei wurde die Titrationszeit auf ca. 50% gegenüber dem Stande der Technik verkürzt, indem sich bei 12 Proben mit einem mittleren Wassergehalt von 6132 ppm und einer Abweichung von nur 0,06% eine Titrationszeit von 26 Sekunden statt 54 bzw. in einem anderen Fall von 62 statt 90 Sekunden ergab. Auch hier hatte die Elektrodenpinlänge, die zwischen 2 und 5 mm lag, keinen Einfluss auf Genauigkeit und Geschwindigkeit. An Stelle eines relativen Driftstops liesse sich gewünschtenfalls auch ein absoluter Driftstop wählen.

Beispiel 6:

Als sodann Einkomponenten-Titriermittel mit Elektrodenpinlängen von 2 bis 5 mm getestet wurden, stellte sich eine grosse Abhängigkeit heraus, wobei kürzere Elektrodenpins deutlich besser waren Die besten Resultat ergaben sich mit einem 2mm-Elektrodenpin., bei dem sich praktisch keine Schwingungsneigung zeigte. Als zunächst die Probleme ohne die Fuzzy-Logik relativ hoch waren, wurde das Phänomen genauer untersucht. Es zeigte sich, dass beim Schwingen die Wartezeiten eine Tendenz zu einer langsamen Zunahme haben. Begonnen wurde mit einem Zugabetakt von t4 = 0,1 Sekunden. Verschiedene Versuche zeigten dann dass unter Anwendung der Fuzzy-Logik nach einer Wartezeit von 5 Sekunden (t1 + t2) auf eine Taktzeit t5 = 0,5 Sekunden und nach einer weiteren Wartezeit auf t6 = 1 Sekunde umgeschaltet werden sollte. Dies milderte die Probleme erheblich.

Im einzelnen ergab sich folgendes Bild: Es wurde mit einem Vmax-Faktor von 100%, d.h. mit einer Umschaltung von Vmax direkt auf Vmin (= V'max) gearbeitet. Der durchschnittlich ermittelte Wassergehalt betrug zwischen 5970 und 5977 ppm. Es ergaben sich bei einer Elektrodenpinlänge von 2 mm für verschiedene Umschaltzeiten von einem 0,1- auf einen 0,5-Sekundentakt die folgenden Werte:

Tabelle 1

| Umschaltung von 0,1 auf 0,5 nach [min:sek] | Restzeit mit 0,5 Sek.-Takt [Sekunden] |
|---|---|
| 1:37 | 60 |
| 1:23 | 42 |
| 1:25 | 53 |
| 1:23 | 30 |

Mit dieser Umschaltung auf einen längeren Zeitabstand, d.h. von t4 auf t5 bzw. t6, wird ein zu früher Abbruch der Titration vermieden, der zu einem scheinbar zu tiefen Messresultat führen würde. Dieser zu frühe Abbruch der Titration ist darauf zurückzuführen, dass gegen den Endpunkt der Reaktion zu die Reaktionsgeschwindigkeit deutlich abnimmt und bei zu kurzem Zeitabstand das Gerät die Fortdauer der Reaktion nicht "erkennt". Daraus ist ersichtlich, dass - im Gegensatz zum Stand der Technik, bei dem man nur den Abstand des jeweiligen Punktes entlang der Kurve 1 oder 2 als Regelgrösse heranzog - im Sinne der Erfindung grundsätzlich versucht, dem Kurvenverlauf der Reaktion enger zu folgen. Darin liegt das Prinzip der vorliegenden Erfindung.

Beispiel 7:

Eine Probe nach Beispiel 6 wurde mit einem Einkomponenten-Titriermittel (Pyridin) getestet. Vmin war auf 0,5 μL, Vmax auf 5,0 μL und der Vmax-Faktor auf 100% eingestellt, d.h. dass nach einer Zeit von t2 von Vmax unmittelbar auf Vmin = V'max umgeschaltet wurde. Das Ergebnis stimmte mit Tabelle 1 überein.

**Patentansprüche**

1. Verfahren zum Titrieren von Substanzen unter schrittweiser Zugabe einer jeweiligen Einzelmenge oder Inkrementes eines Titriermittels in Zeitabständen (t4, t5, t6), während der Ablauf der Reaktion auf das Erreichen ihres Endpunktes (EP) hin überwacht und die Zugabe von Titriermittel geregelt wird, wobei Einzelmenge und Zeitabstände (t4, t5, t6) die Titriergeschwindigkeit bestimmende Parameter darstellen, dadurch gekennzeichnet, dass für die Regelung der Zugabe von Titriermittel mindestens eine Differentialkomponente auf Grund des Verlaufes der Zugabe von Titriermittel in Inkrementen herangezogen wird.

2. Verfahren nach Anspruch 1, dadurch gekennzeichnet, dass die Differentialkomponente wenigstens zum Teil aus von Substanzen, Titriermittel, Lösungsmittel, Elektrodenpinlänge od.dgl. Parametern abgeleiteten Kurvenverläufen der Reaktion gewonnen wird.

3. Verfahren nach Anspruch 1 oder 2, dadurch gekennzeichnet, dass die Differentialkomponente nach einer Fuzzy-Logik (FUZ) verarbeitet wird, und dass vorzugsweise durch die Fuzzy-Logik wenigstens einer der die Titriergeschwindigkeit bestimmenden Parameter über die Zeit verändert wird, vorzugsweise für rascher ablaufende Reaktionen das grösste Inkrement, für langsamere Reaktionen der Zeitabstand (t4, t5, t6) verändert wird, dass zweckmässig eine Maximalmenge (Vmax) für ein Inkrement vorgegeben und diese Maximalmenge im Verlauf der Titration auf ein niedrigeres Niveau (V'max bzw. V''max), bevorzugt auf maximal 50% der ursprünglichen Maximalmenge, insbesondere auf 20 bis 40%, z.B. um 30%, abgesenkt wird, und dass besonders bevorzugt in der Fuzzy-Logik (FUZ) ausser dem jeweiligen Abstand zum Endpunkt (EP) zumindest auch die Differentialkomponente berücksichtigt wird.

4. Verfahren nach Anspruch 3, dadurch gekennzeichnet, dass eine Absenkung der Maximalmenge jeweils bei einem relativ starken Einbruch (3) vorgenommen wird.

5. Verfahren nach einem der vorhergehenden Ansprüche, dadurch gekennzeichnet, dass eine maximale absolute/relative Drift vorgegeben wird, bei deren Überschreiten die Titration abgebrochen wird.

6. Verfahren nach einem der vorhergehenden Ansprüche, dadurch gekennzeichnet, dass es für eine Karl-Fischer-Titration eingesetzt und vorzugsweise die Differentialkomponente aus der Potentialänderung gewonnen wird.

7. Vorrichtung zur Durchführung des Verfahrens nach einem der vorhergehenden Ansprüche, mit einer Zugabeeinheit (11-13) zur schrittweisen Zugabe einer jeweiligen Einzelmenge oder Inkrementes eines Titriermittels in Zeitabständen sowie einer Überwachungs- und Regelungseinrichtung zur Regelung der Zugabe von Titriermittel, dadurch gekennzeichnet, dass eine Differenzieranordnung (20, M2) vorgesehen ist, durch welche eine Differentialkomponente aus dem Reaktionsverlauf bestimmbar ist, und dass diese Differentialkomponente der Regelungseinrichtung (FUZ) zuführbar ist.

8. Vorrichtung nach Anspruch 7, dadurch gekennzeichnet, dass die Differenzieranordnung einen Speicher (M2) für mindestens zwei Kurvenverläufe unter Zugrundelegung unterschiedlicher Parameter aufweist.

9. Vorrichtung nach Anspruch 7 oder 8, dadurch gekennzeichnet, dass die Differentialkomponente einer eine Fuzzy-Logik (FUZ) aufweisenden Stufe einspeisbar ist, und dass vorzugsweise dieser Stufe (FUZ) auch der jeweilige Abstand zum Endpunkt (EP) der Reaktion zuführbar ist.

10. Vorrichtung nach einem der Ansprüche 7 bis 9, dadurch gekennzeichnet, dass für eine Karl-Fischer-Titration die Differenziereinrichtung (20) mit dem jeweiligen Elektrodenanschluss (16) zum Bestimmen der Potentialänderung verbunden oder verbindbar ist.

Fig.1

8

$$\frac{d[I_2]}{dt} = k \cdot [H_2O] \cdot [SO_2] \cdot [RN]$$

Fig. 2

Fig.3

**Europäisches Patentamt**

# EUROPÄISCHER RECHERCHENBERICHT

Nummer der Anmeldung

EP 99 20 3564

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | ISENGARD H D ET AL: "Techniken zur schnellen Wasserfreisetzung bei der Wassergehaltsbestimmung nach Karl Fischer" CLB - CHEMIE IN LABOR UND BIOTECHNIK, Bd. 42, Nr. 6, Juni 1991 (1991-06), Seiten 315-321, XP002130983 ISSN 0943-6677 * Abschnitt 'Endpunktserkennung und Regelung'; Abbildungen 1-3 * | 1,2,5-7, 10 | G01N31/16 |
| X | MACLEOD S K: "Moisture determination using Karl Fischer titrations" ANALYTICAL CHEMISTRY, Bd. 63, Nr. 10, Mai 1991 (1991-05), Seiten 557A-566A, XP000217463 ISSN 0003-2700 | 1,2 | |
| A | * Abschnitt 'Endpoint determination' * | 3,5-7,10 | |
| X | FIRSTENBERG S ET AL: "A microcomputer-based digital titrator" INTERNATIONAL LABORATORY, Bd. 8, März 1978 (1978-03), Seiten 99-102, XP002130984 ISSN 0010-2164 * das ganze Dokument * | 1,2,7 | **RECHERCHIERTE SACHGEBIETE (Int.Cl.7)** G01N |
| Y | METROHM PROGRAM 1996, Produktkatalog, Metrohm Ionenanalytik, Metrohm AG, CH-9101 Herisau XP002130986 * Seite 12 * | 1-5,7-9 | |

-/--

Der vorliegende Recherchenbericht wurde für alle Patentansprüche erstellt

| Recherchenort | Abschlußdatum der Recherche | Prüfer |
|---|---|---|
| BERLIN | 28. Februar 2000 | Johnson, K |

EPO FORM 1503 03.82 (P04C03)

**Europäisches Patentamt**

# EUROPÄISCHER RECHERCHENBERICHT

Nummer der Anmeldung

EP 99 20 3564

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | JP 05 309376 A (JAPAN ORGANO CO LTD) 22. November 1993 (1993-11-22) * Abbildungen * -& PATENT ABSTRACTS OF JAPAN vol. 18, no. 118 (C-1172), 25. Februar 1994 (1994-02-25) & JP 05 309376 A (...) * Zusammenfassung * | 1-5,7-9 | |
| A | HARRINGTON, P. DE B ET AL: "FLIN: fuzzy linear interpolating network" ANALYTICA CHIMICA ACTA, Bd. 277, Nr. 2, Mai 1993 (1993-05), Seiten 189-197, XP000879443 ISSN 0003-2670 * das ganze Dokument * | 1,3,7,9 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| BERLIN | 28. Februar 2000 | Johnson, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    ............................................................................
& : Mitglied der gleichen Patentfamilie, übereinstimmendes
    Dokument

EPO FORM 1503 03.82 (P04C03)

EP 0 999 446 A1

## ANHANG ZUM EUROPÄISCHEN RECHERCHENBERICHT
## ÜBER DIE EUROPÄISCHE PATENTANMELDUNG NR.

EP 99 20 3564

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2000

| Im Recherchenbericht angeführtes Patentdokument | Datum der Veröffentlichung | Mitglied(er) der Patentfamilie | Datum der Veröffentlichung |
|---|---|---|---|
| JP 05309376 A | 22-11-1993 | KEINE | |